# EUROPEAN PATENT SPECIFICATION

(11) **EP 1 845 244 B1**
(45) Date of publication and mention of the grant of the patent: **04.08.2010**
(21) Application number: 07105893.7
(22) Date of filing: 10.04.2007
(51) Int. Cl.: F02D 9/04, F02B 37/00, F01N 11/00, F02D 41/00, F02D 41/22, F02B 29/04, F02M 25/07

(54) **Exhaust gas purification system of internal combustion engine**
Abgasreinigungssystem eines Verbrennungsmotors
Système de purification de gaz d'échappement d'un moteur à combustion interne

(30) Priority: 11.04.2006 JP 2006108552
(43) Date of publication of application: 17.10.2007
(73) Proprietor: TOYOTA JIDOSHA KABUSHIKI KAISHA, Toyota-shi, Aichi-ken, 471-8571 (JP)
(72) Inventor: MATSUMOTO, Isao, c/o TOYOTA JIDOSHA KABUSHIKI KAISHA, AICHI-KEN 471-8571 (JP); NAGAE, Masahiro, c/o TOYOTA JIDOSHA KABUSHIKI KAISHA, Aichi-ken 471-8571 (JP)
(74) Representative: Intes, Didier Gérard André

(56) References cited:
- EP-A- 1 176 292
- JP-A- 2003 097 333

## Description

### BACKGROUND OF THE INVENTION

### 1. Field of the Invention

The invention relates to an exhaust purification system of an internal combustion engine.

### 2. Description of the Related Art

Exhaust gas re-circulation (hereinafter, referred to as "EGR") is a known technology for lowering oxides of nitrogen (hereinafter, referred to as "NOx") discharged from internal combustion engines. The technology reduces the generation of NOx in the combustion process by re-circulating a portion of exhaust gas into the combustion chambers.

Document EP-A-1 176 292 discloses an exhaust purification means with an exhaust throttle valve provided in the exhaust passageway downstream of the exhaust purification means; determination means for determining whether the exhaust purification means is broken; and control means for controlling the exhaust throttle valve.

In recent years, a low-pressure EGR device has also been developed as a technology that performs the EGR over a wider operational range of the internal combustion engine. In this EGR device, a portion of the exhaust gas flowing in an exhaust passageway downstream of the turbine of a turbocharger is recirculated into an intake passageway upstream of the compressor of the turbocharger (see, e.g., Japanese Patent Application Publication No. JP-A-2002-021625).

Incidentally, in some internal combustion engines equipped with a low-pressure EGR device, an exhaust throttle valve is provided in the exhaust passageway in so as to secure a differential pressure between the upstream and downstream sides of a low-pressure EGR passageway and therefore cause the performance of a sufficient amount of EGR. There are also constructions in which the exhaust passageway is provided with a PM filter, or an exhaust purification catalyst such as a NOx catalyst or the like.

With regard to the exhaust purification catalyst, if an excessive temperature increase exceeds the heat resistance temperature of the material that constitutes the exhaust purification catalyst or causes an enlarged local temperature difference, local differences in heat expansion may occur and therefore cause breakage such as cracking, chipping, etc of the exhaust purification catalyst. In a worst case, there is a risk that such breakage will result in a broken piece falling off from the exhaust purification catalyst.

In an internal combustion engine having a construction in which an exhaust purification catalyst is provided upstream of an exhaust throttle valve, if the exhaust purification catalyst breaks and pieces of the broken exhaust purification catalyst flow down the exhaust passageway while the exhaust throttle valve is controlled in a valve closing direction, the broken pieces may clog the exhaust throttle valve that has been controlled toward the closed state and therefore blocking the exhaust passageway. If the exhaust passageway is blocked, the internal combustion engine may stop operating.

### SUMMARY OF THE INVENTION

The invention provides a technology for an internal combustion engine equipped with an exhaust purification catalyst provided in an exhaust passageway upstream of an exhaust throttle valve that reduces the likelihood that the exhaust passageway will be blocked at the exhaust throttle valve even when the exhaust purification catalyst has broken.

An exhaust purification system for an internal combustion engine in accordance with one aspect of the invention is characterized by including: an exhaust purification means for being provided in an exhaust passageway of the internal combustion engine and for purifying exhaust gas; an exhaust throttle valve provided in the exhaust passageway downstream of the exhaust purification means; determination means for determining whether the exhaust purification means is broken; and control means for controlling the exhaust throttle valve, such that the control means increases the opening degree, or fully opens, the exhaust throttle valve if it is determined that the exhaust purification means is broken.

According to this construction, if the determination means determines that the exhaust purification means is broken, the exhaust throttle valve is controlled to the fully open state or to the open side of the degree of opening thereof set in the case where it is determined that the exhaust purification means is not broken. Therefore, even if the exhaust purification means breaks and broken pieces thereof flow down the exhaust passageway, the broken pieces pass through the exhaust throttle valve, substantially without being trapped or stuck on the exhaust throttle valve. Hence, it is possible to keep broken pieces of the exhaust purification means from accumulating on or around the exhaust throttle valve and blocking the exhaust passageway. In turn, it becomes possible to restrain the occurrence of troubles caused by the blockage of the exhaust passageway, such as a stop of the internal combustion engine or the like.

Examples of the exhaust purification means include a PM filter that traps and oxidizes particulate matter (hereinafter, simply referred to as "PM") in exhaust gas, a NOx catalyst that stores and reduces NOx in exhaust gas, an oxidation catalyst that oxidizes unburned fuel or the like in the exhaust gas, and suitable combinations thereof.

Examples of the foregoing exhaust purification system of an internal combustion engine having the exhaust purification means upstream of the exhaust throttle valve include an exhaust purification system that has an EGR means that recirculates a portion of the exhaust gas flowing in the exhaust passageway to the intake passageway via an EGR passageway that connects in communication the exhaust passageway downstream of the exhaust purification means and upstream of the exhaust throttle valve and the intake passageway.

The amount of exhaust gas recirculated into the intake passageway by the EGR means (hereinafter, simply referred to as "EGR gas amount") is dependent on the differential pressure between the exhaust pressure in the exhaust passageway and the intake pressure in the intake passageway. Therefore, when exhaust gas is recirculated by the EGR means, the exhaust throttle valve is controlled to the closure side of the valve position set when exhaust gas is not recirculated by the EGR means. Since the exhaust throttle valve is controlled to the closure side, the differential pressure increases so that a sufficient EGR gas amount can be secured. Generally, the exhaust purification means is provided in the exhaust passageway upstream of an EGR gas extraction opening, so that the exhaust purified by the exhaust purification means will be recirculated to the intake passageway.

Hence, in the exhaust purification system constructed as described above, if the exhaust purification means breaks while the exhaust throttle valve is controlled to the closure side, there is a risk that broken pieces of the exhaust purification means may accumulate on or around the exhaust throttle valve and thereby block the exhaust passageway.

However, in this aspect of the invention, if it is determined that the exhaust purification means is broken, the open-close control of the exhaust throttle valve by the control means is performed preferentially over the control of the degree of opening of the exhaust throttle valve by the EGR means in association with the recirculation of exhaust gas. Specifically, even when the exhaust throttle valve is controlled to the closure side in association with the implementation of the recirculation of exhaust gas by the EGR means, the exhaust throttle valve is controlled to the fully open state or to the open side if the exhaust purification means breaks. Therefore, even if broken pieces of the exhaust purification means flow down the exhaust passageway, the broken pieces substantially do not accumulate on or around the exhaust throttle valve. Hence, it is possible to restrain such broken pieces from blocking the exhaust passageway.

In an exhaust purification system that has an EGR means that recirculates exhaust gas via an EGR passageway that communicably connects the exhaust passageway downstream of the turbine of the turbocharger and the intake passageway upstream of the compressor of the turbocharger (hereinafter, referred to as "low-pressure EGR device"), the differential pressure between the exhaust pressure in the exhaust passageway and the intake pressure in the intake passageway is small and a sufficient EGR gas amount cannot be easily obtained during an intermediate-load operation state of internal combustion engine. Therefore, during such a state, the exhaust throttle valve is controlled to the closure side of the valve position set during a high-load operation state of the internal combustion engine.

Therefore, if the exhaust purification means breaks while the recirculation of exhaust gas by the low-pressure EGR device (hereinafter, referred to as "low-pressure EGR") is being performed, the exhaust passageway may become blocked at the exhaust throttle valve. However, in the foregoing construction, even when the low-pressure EGR is being performed, the exhaust throttle valve is controlled to the fully open state or to the open side if the exhaust purification means is broken. This restrains broken pieces of the exhaust purification means from blocking the exhaust passageway.

Examples of the exhaust purification system of an internal combustion engine having an exhaust purification means upstream of the exhaust throttle valve include an exhaust purification system which has a PM filter as an exhaust purification means, and which raises the temperature of the PM filter by controlling the exhaust throttle valve to the closure side during the implementation of the PM restoration process of removing PM deposit from the PM filter.

In such an exhaust purification system, too, if the PM filter breaks during the implementation of the process of raising the temperature of the PM filter, there is a possibility of broken pieces of the PM filter accumulating on and around the exhaust throttle valve and blocking the exhaust passageway.

Hence, in the exhaust purification system constructed as described above, too, when it is determined that the PM filter is broken, the exhaust throttle valve may be controlled to the fully open state or to the open side regardless of whether or not the PM filter temperature raising operation is being executed. Therefore, the blockage of the exhaust passageway by broken pieces of the PM filter may be restrained.

According to this aspect of the invention, in the internal combustion engine having the exhaust purification means in the exhaust passageway upstream of the exhaust throttle valve, even if the exhaust purification means breaks, broken pieces of the exhaust purification means may be restrained from accumulating on and around the exhaust throttle valve and blocking the exhaust passageway.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a diagram showing an overall construction of an internal combustion engine and its intake-exhaust system in accordance with an embodiment of the invention is applied;
FIG. 2 is a diagram showing the operational states of the internal combustion engine in which LPL-EGR or HPL-EGR is performed in the embodiment;
FIG. 3 is a flowchart showing an open-close control routine for an exhaust throttle valve in the embodiment; and
FIG. 4 is a diagram showing an exhaust purification device 17 in the embodiment, and a connecting portion between the exhaust purification device 17 and a low-pressure EGR passageway 11.

### DETAILED DESCRIPTION OF THE PREFERRED EMBODIMENTS

An example embodiment of the invention will be described in detail hereinafter with reference to the drawings.

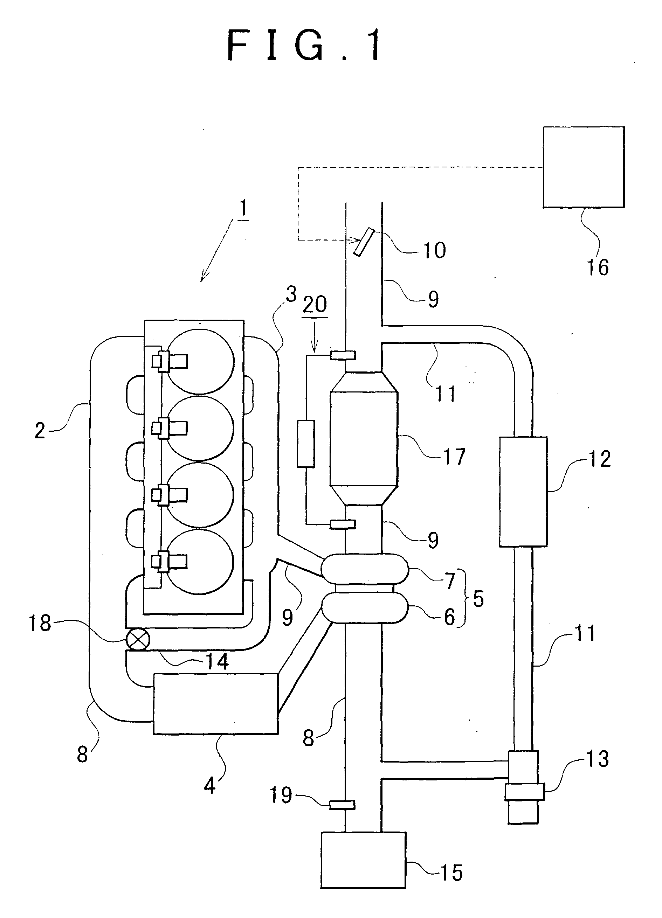

FIG. 1 is a diagram showing an overall construction of an internal combustion engine and its intake-exhaust system equipped with an exhaust purification system in accordance with the invention.

Combustion chambers of an internal combustion engine 1 in FIG. 1 are connected to an intake passageway 8 via an intake manifold 2. The intake passageway 8 is provided with an intercooler 4, and the intake passageway 8 upstream of the intercooler 4 is provided with a compressor 6 of a turbocharger 5. An air flow meter 19 and an air cleaner 15 are provided upstream of the compressor 6.

The combustion chambers of the internal combustion engine 1 are also connected to an exhaust passageway 9 via an exhaust manifold 3. The turbine 7 of the turbocharger 5 is provided in the exhaust passageway 9. An exhaust purification device 17 is provided downstream of the turbine 7. The exhaust purification device 17 may be, for example, a PM filter that traps PM in exhaust gas, a NOx catalyst that stores and reduces NOx in exhaust gas, an oxidation catalyst that oxidizes unburned fuel or the like in exhaust gas, etc. A suitable combination thereof is also possible. Downstream of the exhaust purification device 17, the exhaust passageway 9 is open to the atmosphere.

The exhaust passageway 9 is provided with a differential pressure sensor 20 that detects the differential pressure between the exhaust pressure upstream of the exhaust purification device 17 and the exhaust pressure downstream of the exhaust purification device 17. In addition, the exhaust passageway 9 downstream of the exhaust purification device 17 is provided with an exhaust throttle valve 10 that changes the channel cross-sectional area of the exhaust passageway 9. The exhaust throttle valve 10 is electrically connected to an ECU 16 (described later) and the ECU 16 outputs a control signal to adjust the valve opening degree of the exhaust throttle valve 10.

A site in the exhaust passageway 9 that is downstream of the exhaust purification device 17 and upstream of the exhaust throttle valve 10, and a site in the intake passageway 8 that is upstream of the compressor 6 are communicably connected by a low-pressure EGR passageway 11. The low-pressure EGR passageway 11 is provided with a low-pressure EGR cooler 12 that cools the exhaust flowing through the low-pressure EGR passageway 11, and a low-pressure EGR valve 13 that changes the channel cross-sectional area of the low-pressure EGR passageway 11. The low-pressure EGR valve 13 adjusts the amount of exhaust gas that flows through the low-pressure EGR passageway 11 (hereinafter, referred to as "low-pressure EGR gas amount"). In addition, the exhaust manifold 3 and the intake manifold 2 are communicably connected by a high-pressure EGR passageway 14. The high-pressure EGR passageway 14 is provided with a high-pressure EGR valve 18 that changes the channel cross-sectional area of the high-pressure EGR passageway 14. The high-pressure EGR valve 18 adjusts the amount of exhaust gas that flows through the high-pressure EGR passageway 14 (hereinafter, referred to as "high-pressure EGR gas amount'').

A portion of the exhaust gas is recirculated into the intake system of the internal combustion engine 1 through the low-pressure EGR passageway 11 and the high-pressure EGR passageway 14. Therefore, exhaust gas is re-circulated into the combustion chambers of the internal combustion engine 1 to reduce the amount of NOx generated in the internal combustion engine 1.

The internal combustion engine 1 is provided with the ECU 16, which is an electronic control computer that controls the internal combustion engine 1. The ECU 16 performs known controls of the internal combustion engine 1, such as a fuel injection control and the like, in accordance with the operating condition of the internal combustion engine 1 or a driver's request, and also performs an open-close control of the exhaust throttle valve 10.

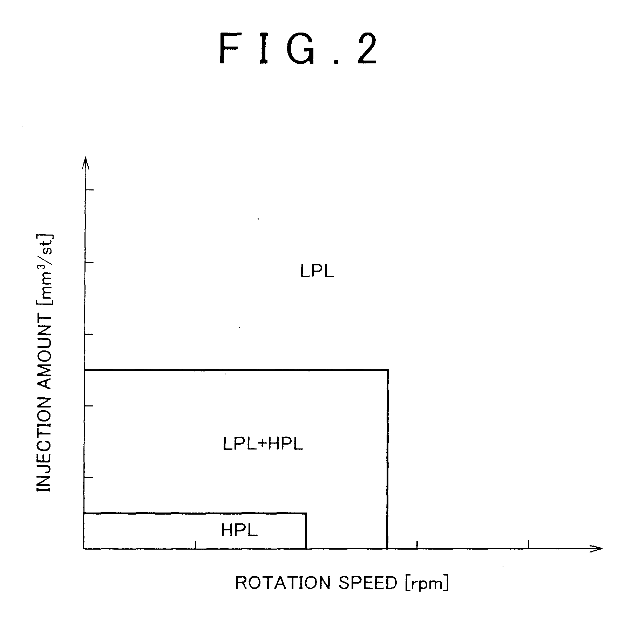

In an exhaust purification system of the internal combustion engine 1 having the above-described construction, the EGR that uses the low-pressure EGR passageway 11 and/or the high-pressure EGR passageway 14 is performed in accordance with the operational state of the internal combustion engine 1. FIG. 2 is a diagram showing which one of the EGRs, that is, the EGR using the low-pressure EGR passageway 11 (hereinafter, referred to as "LPL-EGR") and/or the EGR using the high-pressure EGR passageway 14 (hereinafter, referred to as "HPL-EGR"), is performed depending on regions of the operational state of the internal combustion engine 1. In FIG. 2, the horizontal axis represents the engine rotation speed of the internal combustion engine 1, and the vertical axis represents the amount of fuel injection of the internal combustion engine 1. The amount of fuel injection is a parameter that represents the load of the internal combustion engine 1.

As shown in FIG. 2, the HPL-EGR is mainly performed when the operational state of the internal combustion engine 1 is under low load and has a low rotation speed. When the operational state of the internal combustion engine 1 is under an intermediate load and has an intermediate rotation speed, both the HPL-EGR and the LPL-EGR are performed. When the internal combustion engine 1 is under a high load and has a high rotation speed, the LPL-EGR is mainly performed.

When the internal combustion engine 1 is under a high load and has a high rotation speed, the exhaust pressure in the exhaust passageway 9 is high, so that the differential pressure between the exhaust pressure in the exhaust passageway 9 and the intake pressure in the intake passageway 8 is also high. Therefore, sufficient low-pressure EGR gas amount can be secured. However, when the internal combustion engine 1 is under an intermediate load and has an intermediate rotation speed, the exhaust pressure in the exhaust passageway 9 is not high, thus,the differential pressure does not become great. Therefore, in some of such cases, sufficient low-pressure EGR gas amount is not obtained. Hence, in such a case, the exhaust throttle valve 10 is controlled to a closure side in comparison with when the internal combustion engine 1 operates under a high load and has a high rotation speed, to raise the exhaust pressure in the exhaust passageway 9 and therefore increase the differential pressure. In this manner, the low-pressure EGR gas amount is secured.

With regard to the exhaust purification device 17, if an excessive temperature increase exceeds the heat resistance temperature of the material that constitutes the catalyst, the filter or the like or causes an enlarged local temperature difference, local differences in heat expansion may occur and therefore cause breakage such as cracking, chipping, etc of the exhaust purification catalyst. In a worst case, there is a risk that such breakage will result in broken pieces falling off from the exhaust purification device 17. Therefore, if breakage occurs in the exhaust purification device 17 when the exhaust throttle valve 10 is controlled in the valve closing direction, the exhaust throttle valve 10 under the valve closing control may become clogged with broken pieces of the exhaust purification device 17 so that the exhaust passageway is essentially blocked. If the exhaust passageway 9 is blocked, there is a risk of the internal combustion engine 1 coming to a stop.

Therefore in this embodiment, in the valve closing control of the exhaust throttle valve 10, it is determined whether or not the exhaust purification device 17 is broken. If it is determined that the exhaust purification device 17 is broken, then the exhaust throttle valve 10 is fully opened. Therefore, even if the exhaust purification device 17 is broken and it is possible that broken pieces of the exhaust purification device 17 may flow down the exhaust passageway 9, accumulation of the broken pieces thereof on and around the exhaust throttle valve 10, and thereby blocking the exhaust passageway 9, is minimized by fully opening the exhaust throttle valve 10.

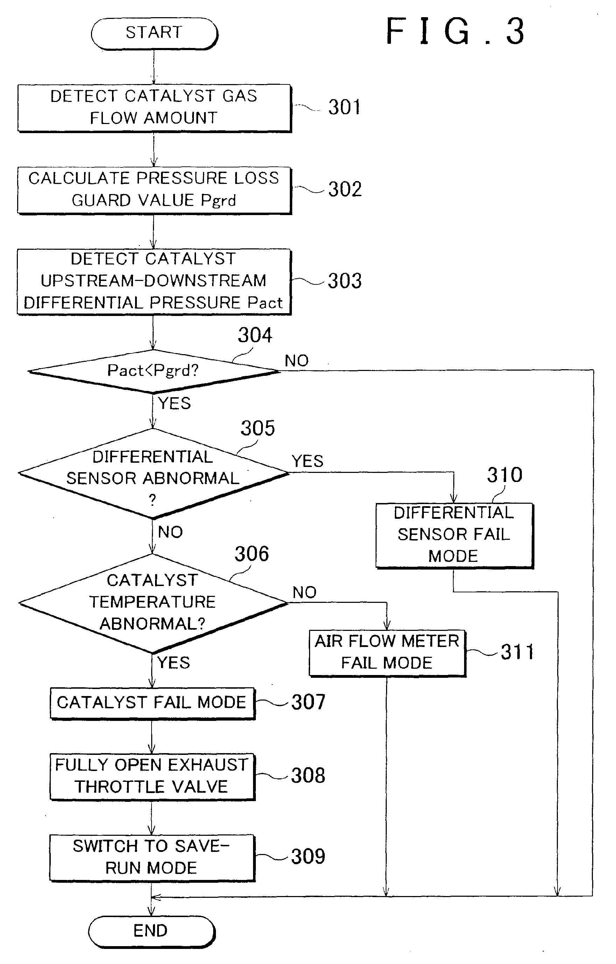

The open-close control of the exhaust throttle valve 10 executed by the ECU 16 will be described with reference to the flowchart of FIG. 3. The flowchart of FIG. 3 shows the routine for executing the open-close control of the exhaust throttle valve 10. This routine is executed at regular intervals.

First, in step 301, the ECU 16 detects the amount of exhaust flowing through the exhaust purification device 17 (hereinafter, referred to as "catalyst gas flow amount"). The catalyst gas flow amount may be estimated, for example, based on the intake amount detected by the air flow meter 19, the valve opening degree of the low-pressure EGR valve 13, and the valve opening degree of the high-pressure EGR valve 18.

Subsequently in step 302, the ECU 16 calculates the pressure loss guard value Pgrd based on the catalyst gas flow amount detected in step 301. The pressure loss guard value Pgrd is the lower limit value of the differential pressure between the upstream and downstream sides of the exhaust purification device 17 which is calculated from the catalyst gas flow amount through the use of the exhaust resistance in the normal-condition exhaust purification device 17 that has no deposit thereon. The pressure loss guard value Pgrd may be determined beforehand through experiments or the like, in the form of a function or a map that is in accordance with the catalyst gas flow amount.

In step 303, the ECU 16 detects the upstream-downstream differential pressure Pact of the exhaust purification device 17 (hereinafter, referred to as "catalyst upstream-downstream differential pressure"). The catalyst upstream-downstream differential pressure Pact is detected by the differential pressure sensor 20.

In step 304, the ECU 16 determines whether there is a possibility that the exhaust purification device 17 is broken. Concretely, the ECU 16 determines whether the catalyst upstream-downstream differential pressure Pact detected in step 303 is lower than the pressure loss guard value Pgrd calculated in step 302. The determination process is explained as follows. If the exhaust purification device 17 is broken, the channel cross-sectional area of the exhaust purification device 17 increases since, for example, a portion of the catalyst or the filter in the exhaust purification device 17 falls off. As a result, the pressure loss in the exhaust purification device 17 is reduced.

If a negative determination is made in step 304 (Pact≥Pgrd), the ECU 16 determines that the exhaust purification device 17 is not broken, and ends the routine.

On the other hand, if an affirmative determination is made in step 304 (Pact<Pgrd), the ECU 16 determines that there is a possibility that the exhaust purification device 17 is broken, and proceeds to step 305.

In step 305, the ECU 16 determines whether the differential pressure sensor 20 has failed. The failure determination regarding the differential pressure sensor 20 is performed by executing a known failure determination routine.

If an affirmative determination is made in step 305, the ECU 16 determines that due to the failure of the differential pressure sensor 20, the catalyst upstream-downstream differential pressure Pact that was detected is lower than the pressure loss guard value Pgrd in step 304, and proceeds to step 310. In step 310, the ECU 16 switches of the operational state of the vehicle to a differential pressure sensor fail mode. In the differential pressure sensor fail mode, the lighting of a warning lamp or the like is performed in order to notify the failure of the differential pressure sensor to a driver. After executing step 310, the ECU 16 ends the routine.

On the other hand, if a negative determination is made in step 305, the ECU 16 determines that the cause of the detection in step 304 that the catalyst upstream-downstream differential pressure Pact is lower than the pressure loss guard value Pgrd is not a failure of the differential pressure sensor 20, and proceeds to step 306.

In step 306, the ECU 16 determines whether the temperature of the exhaust purification device 17 is equal to or higher than a limit value. The limit value herein is a lower limit value of the temperature that involves a risk of breakage of the exhaust purification device 17, and empirically determined beforehand. The temperature of the exhaust purification device 17 may be directly detected by mounting a temperature sensor on the exhaust purification device 17, or may also be estimated from the engine rotation speed and the engine load.

If a negative determination is made in step 306, the ECU 16 determines that the exhaust purification device 17 is not broken, and proceeds to step 311. In step 311, the ECU 16 determines that there is possibility of abnormality in the output of a sensor other than the differential pressure sensor 20, for example, the output of the air flow meter 19 used for the detection or estimation of the catalyst gas flow amount, or the like, and turns on a warning lamp or the like in order to notify the determination result to the driver.

On the other hand, if an affirmative determination is made in step 306, the ECU 16 determines that breakage of the exhaust purification device 17 is the cause of the detection in step 304 that the catalyst upstream-downstream differential pressure Pact is lower than the pressure loss guard value Pgrd, and proceeds to step 307.

In step 307, the ECU 16 turns on the warning lamp or the like in order to inform the driver that the exhaust purification device 17 has broken and that the internal combustion engine 1 will be operated in a save-run mode from then on.

Subsequently in step 308, the ECU 16 fully opens the exhaust throttle valve 10. Therefore, even if broken pieces of the exhaust purification device 17 flow down the exhaust passageway 9, the broken pieces will be restrained from accumulating on and around the exhaust throttle valve 10. Thus, it becomes possible to restrain the blockage of the exhaust passageway 9.

In step 309, the ECU 16 restricts the operational state of the internal combustion engine 1 to the save-run mode. The save-run mode is an operational mode of the internal combustion engine 1 that allows the driver a minimum necessary propulsion of the vehicle to cope with the failure of the exhaust purification device 17. In the save-run mode, for example, the amount of fuel injection and the engine rotation speed are restricted. After switching the operational state of the internal combustion engine 1 to the save-run mode in step 309, the ECU 16 ends this routine.

In this embodiment, the ECU 16, which executes step 304, step 305 and step 306 in the foregoing routine of the open-close control of the exhaust throttle valve 10, is an example of the determination means in accordance with the invention. In addition, the ECU 16, which executes step 308, is an example of the control means in accordance with the invention.

The foregoing embodiment is an example for illustrating the invention, and may be modified in various ways without departing from the spirit of the invention. For example, although in the foregoing routine, the degree of opening of the exhaust throttle valve 10 is controlled to the fully open state if it is determined that the exhaust purification device 17 is broken, the similar effects characteristic of the foregoing embodiment may also be obtained when the exhaust throttle valve 10 is controlled to a degree of opening that is greater than (i.e., to the open side of) the degree of opening set when it is not determined that the exhaust purification device 17 is broken.

Furthermore, in an exhaust purification system that includes a PM filter as the exhaust purification device 17 and that raises the temperature of the PM filter by controlling the exhaust throttle valve toward the closure side when implementing a PM restoration process of removing deposits of PM from the PM filter, if it is determined that the PM filter is broken, the degree of opening of the exhaust throttle valve may be controlled to the fully open state or to the open side of the degree of opening of the valve set when it is determined that the PM filter is not broken.

Thus, if the PM filter breaks during the execution of the process of raising the temperature of the PM filter, the blockage of the exhaust passageway by broken pieces of the PM filter can be restrained.

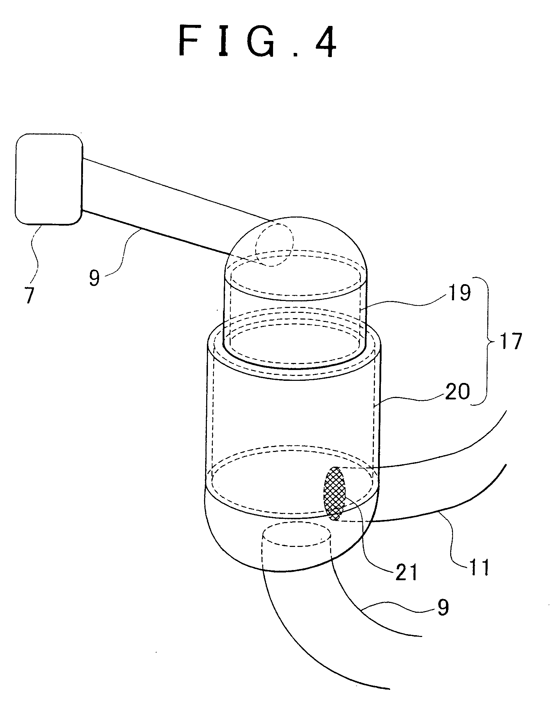

Furthermore, a construction shown in FIG. 4 is also possible. In this construction, the low-pressure EGR passageway 11 may be connected to a side wall surface immediately downstream of the exhaust purification device 17, and a mesh 20 is provided at an inlet of the low-pressure EGR passageway 11. Therefore, a broken piece of the exhaust purification device 17 may be restrained from flowing into the low-pressure EGR passageway 11. In addition, if the exhaust passageway 9, connected to the outlet of the exhaust purification device 17, is connected at a site vertically downward from the exhaust purification device 17, a broken piece of the exhaust purification device 17 may also be restrained from flowing into the low-pressure EGR passageway 11. Therefore, the adoption of this construction also restrains a broken piece of the exhaust purification device 17 from flowing into the low-pressure EGR passageway 11 if the exhaust purification device 17 breaks. Therefore, it is possible to restrain the clogging of the low-pressure EGR passageway 11 or the low-pressure EGR cooler 12.

Although in FIG. 4, the exhaust purification device 17 includes an oxidation catalyst 19 on an upstream side and a DPF 20 on a downstream side, the catalyst used is not limited as long as the low-pressure EGR passageway 11 is connected to the side wall immediately downstream of the catalyst provided downstream of the exhaust purification device 17.

## Claims

1. An exhaust purification system of an internal combustion engine (1) comprising:
an exhaust purification means (17) for being provided in an exhaust passageway (9) of the internal combustion engine (1) and for purifying exhaust gas;
an exhaust throttle valve (10) provided in the exhaust passageway (9) downstream of the exhaust purification means (17);
determination means (16) for determining whether the exhaust purification means (17) is broken; and
control means (16) for controlling the exhaust throttle valve (10), **characterized in that** the control means (16) increases an opening degree or fully opens the exhaust throttle valve (10) if it is determined that the exhaust purification means (17) is broken.

2. The exhaust purification system of the internal combustion engine (1) according to claim 1, **characterized by** further comprising:
an EGR means for having an EGR passageway (11) that communicably connects the exhaust passageway (9) downstream of the exhaust purification means (17) and upstream of the exhaust throttle valve (10) with an intake passageway (8), and for recirculating a portion of the exhaust from the exhaust passageway (9) to the intake passageway (8) via the EGR passageway (11); and
EGR control means (16) for controlling the exhaust throttle valve (10) when the exhaust gas is recirculated by the EGR means so that the degree of opening of the exhaust throttle valve (10) is set smaller than the degree of opening set when the exhaust gas is not recirculated by the EGR means,
wherein if it is determined by the determination means (16) that the exhaust purification means (17) is broken, the control of the degree of opening of the exhaust throttle valve (10) by the EGR control means (16) is given a priority over the control of the degree of opening of the exhaust throttle valve (10) by the control means (16).

3. The exhaust purification system of the internal combustion engine (1) according to claim 2, **characterized by** further comprising:
a turbocharger (5), having a compressor (6) provided in the intake passageway (8) and a turbine (7) provided in the exhaust passageway (9), wherein the EGR passageway (11) communicably connects the exhaust passageway (9) downstream of the turbine (7) and the intake passageway (8) upstream of the compressor (6).

4. The exhaust purification system of the internal combustion engine (1) according to claim 2 or 3, **characterized in that** the determination means (16) determines that the exhaust purification means (17) is broken, if a differential pressure between the intake passageway (8) and the exhaust passageway (9) is below a predetermined value.

5. The exhaust purification system of the internal combustion engine (1) according to claim 2 or 3, **characterized in that** the determination means (16) determines that the exhaust purification means (17) is broken, if the differential pressure between the intake passageway (8) and the exhaust passageway (9) is below the predetermined value and a temperature of the exhaust purification means (17) is equal to or above a predetermined temperature.

6. The exhaust purification system of the internal combustion engine (1) according to any one of claims 2 to 5, **characterized by** further comprising:
engine control means (16) for controlling the internal combustion engine (1), wherein if it is determined that the exhaust purification means (17) is broken, the engine control means (16) reduces an output of the internal combustion engine (1).

## Patentansprüche

1. Abgasreinigungssystem für eine Verbrennungskraftmaschine (1), umfassend:
ein Abgasreinigungsmittel (17), dazu vorgesehen, in einem Absaugkanal (9) der Verbrennungskraftmaschine (1) und zum Reinigen des Abgases angeordnet zu werden,
ein Abgasdrosselventil (10), das in dem Absaugkanal (9) stromab des Abgasreinigungsmittels (17) vorgesehen ist,
ein Bestimmungsmittel (16) zum Bestimmen, ob das Abgasreinigungsmittel (17) defekt ist, und
ein Steuermittel (16) zum Steuern des Abgasdrosselventils (10), **dadurch gekennzeichnet,**
**daß** das Steuermittel (16) einen Öffnungsgrad des Abgasdrosselventils (10) vergrößert oder dieses voll öffnet, wenn festgestellt wird, daß das Abgasreinigungsmittel (17) defekt ist.

2. Abgasreinigungssystem für die Verbrennungskraftmaschine (1) nach Anspruch 1, **dadurch gekennzeichnet, daß** es außerdem umfaßt:
ein AGR-Mittel zum Schaffen eines AGR-Kanals (11), der den Absaugkanal (9) stromab des Abgasreinigungsmittels (17) und stromauf des Abgasdrosselventils (10) kommunizierbar mit einem Ansaugkanal (8) verbindet, und zum Rückführen eines Teils des Abgases aus dem Absaugkanal (9) über den AGR-Kanal (11) zu dem Ansaugkanal (8), und
ein AGR-Steuermittel (16) zum Steuern des Abgasdrosselventils (10) beim Rückführen des Abgases durch das AGR-Mittel, so daß der Öffnungsgrad des Abgasdrosselventils (10) kleiner als der Öffnungsgrad eingestellt wird, der eingestellt ist, wenn das Abgas nicht durch das AGR-Mittel rückgeführt wird,
wobei bei Feststellung durch das Bestimmungsmittel (16), daß das Abgasreinigungsmittel (17) defekt ist, der Steuerung des Öffnungsgrads des Abgasdrosselventils (10) durch das AGR-Steuermittel (16) Priorität gegenüber der Steuerung des Öffnungsgrads des Abgasdrosselventils (10) durch das Steuermittel (16) eingeräumt wird.

3. Abgasreinigungssystem für die Verbrennungskraftmaschine (1) nach Anspruch 2, **dadurch gekennzeichnet, daß** es außerdem umfaßt:
einen Turbolader (5) mit einem in dem Ansaugkanal (8) vorgesehenen Verdichter (6) und einer in dem Absaugkanal (9) vorgesehenen Turbine (7), wobei der AGR-Kanal (11) den Absaugkanal (9) stromab der Turbine (7) und den Ansaugkanal (8) stromauf des Verdichters (6) kommunizierbar verbindet.

4. Abgasreinigungssystem für die Verbrennungskraftmaschine (1) nach Anspruch 2 oder 3, **dadurch gekennzeichnet, daß** das Bestimmungsmittel (16) feststellt, daß das Abgasreinigungsmittel (17) defekt ist, wenn ein Differenzdruck zwischen dem Ansaugkanal (8) und dem Absaugkanal (9) unter einem vorgegebenen Wert liegt.

5. Abgasreinigungssystem für die Verbrennungskraftmaschine (1) nach Anspruch 2 oder 3, **dadurch gekennzeichnet, daß** das Bestimmungsmittel (16) feststellt, daß das Abgasreinigungsmittel (17) defekt ist, wenn der Differenzdruck zwischen dem Ansaugkanal (8) und dem Absaugkanal (9) unter einem vorgegebenen Wert liegt und eine Temperatur des Abgasreinigungsmittels (17) gleich einer vorgegebenen Temperatur oder höher als diese ist.

6. Abgasreinigungssystem für die Verbrennungskraftmaschine (1) nach einem der Ansprüche 2 bis 5, **dadurch gekennzeichnet, daß** es außerdem umfaßt:
ein Motorsteuermittel (16) zum Steuern der Verbrennungskraftmaschine (1), wobei das Motorsteuermittel (16) dann, wenn festgestellt wird, daß das Abgasreinigungsmittel (17) defekt ist, einen Ausgangswert der Verbrennungskraftmaschine (1) verkleinert.

## Revendications

1. Système de purification d'échappement d'un moteur à combustion interne (1) comportant :
des moyens de purification d'échappement (17) devant être prévus dans un passage d'échappement (9) du moteur à combustion interne (1) et destinés à purifier des gaz d'échappement ;
une soupape à papillon d'échappement (10) prévue dans le passage d'échappement (9) en aval des moyens de purification d'échappement (17) ;
des moyens de détermination (16) destinés à déterminer si les moyens de purification d'échappement (17) sont cassés ; et
des moyens de commande (16) destinés à commander la soupape à papillon d'échappement (10), **caractérisé en ce que** les moyens de commande (16) augmentent un degré d'ouverture ou ouvrent entièrement la soupape à papillon d'échappement (10) si l'on détermine que les moyens de purification d'échappement (17) sont cassés.

2. Système de purification d'échappement du moteur à combustion interne (1) selon la revendication 1, **caractérisé en ce qu'**il comporte en outre :
des moyens de recyclage de gaz d'échappement prévus pour avoir un passage de recyclage de gaz d'échappement (11) qui relient avec communication le passage d'échappement (9) en aval des moyens de purification d'échappement (17) et en amont de la soupape à papillon d'échappement (10) à un passage d'admission (8), et destinés à renvoyer une partie de l'échappement du passage d'échappement (9) dans le passage d'admission (8) par l'intermédiaire du passage de recyclage de gaz d'échappement (11) ; et
des moyens de commande de recyclage de gaz d'échappement (16) destinés à commander la soupape à papillon d'échappement (10) quand les gaz d'échappement sont recyclés par les moyens de recyclage de gaz d'échappement de telle sorte que le degré d'ouverture de la soupape à papillon d'échappement (10) est réglé plus petit que le degré d'ouverture établi quand les gaz d'échappement ne sont pas recyclés par les moyens de recyclage de gaz d'échappement,
la commande du degré d'ouverture de la soupape à papillon d'échappement (10) par les moyens de commande de recyclage de gaz d'échappement (16) étant prioritaire par rapport à la commande du degré d'ouverture de la soupape à papillon d'échappement (10) par les moyens de commande (16) si l'on détermine grâce aux moyens de détermination (16) que les moyens de purification d'échappement (17) sont cassés.

3. Système de purification d'échappement du moteur à combustion interne (1) selon la revendication 2, **caractérisé en ce qu'**il comporte en outre :
un turbocompresseur (5), ayant un compresseur (6) prévu dans le passage d'admission (8) et une turbine (7) prévue dans le passage d'échappement (9), le passage de recyclage de gaz d'échappement (11) reliant avec communication le passage d'échappement (9) en aval de la turbine (7) et le passage d'admission (8) en amont du compresseur (6).

4. Système de purification d'échappement du moteur à combustion interne (1) selon la revendication 2 ou 3, **caractérisé en ce que** les moyens de détermination (16) déterminent que les moyens de purification d'échappement (17) sont cassés, si une différence de pression entre le passage d'admission (8) et le passage d'échappement (9) est en-dessous d'une valeur prédéterminée.

5. Système de purification d'échappement du moteur à combustion interne (1) selon la revendication 2 ou 3, **caractérisé en ce que** les moyens de détermination (16) déterminent que les moyens de purification d'échappement (17) sont cassés, si la différence de pression entre le passage d'admission (8) et le passage d'échappement (9) est en-dessous de la valeur prédéterminée et une température des moyens de purification d'échappement (17) est égale à ou au-dessus d'une température prédéterminée.

6. Système de purification d'échappement du moteur à combustion interne (1) selon l'une quelconque des revendications 2 à 5, **caractérisé en ce qu'**il comporte en outre :
des moyens de commande de moteur (16) destinés à commander le moteur à combustion interne (1), les moyens de commande de moteur (16) réduisant une sortie du moteur à combustion interne (1) si l'on détermine que les moyens de purification d'échappement (17) sont cassés.
